# EUROPEAN PATENT SPECIFICATION

(11) **EP 3 228 485 B1**
(45) Date of publication and mention of the grant of the patent: **29.01.2020**
(21) Application number: 16164159.2
(22) Date of filing: 07.04.2016
(51) Int. Cl.: B60G 9/00, B60G 9/02, B60G 13/00

(54) **AXLE SUSPENSION SYSTEM WITH PANHARD ROD AND VEHICLE WITH AXLE SUSPENSION SYSTEM**
FEDERSYSTEM FÜR EINE ACHSE MIT PANHARDSTAB UND FAHRZEUG MIT FEDERSYSTEM FÜR EINE ACHSE
SYSTÈME DE SUSPENSION D'ESSIEU À BARRE PANHARD ET VÉHICULE AVEC SYSTÈME DE SUSPENSION D'ESSIEU

(43) Date of publication of application: 11.10.2017
(73) Proprietor: Ford Global Technologies, LLC, Dearborn, MI 48126 (US); Ford Otomotiv Sanayi Anonim Sirketi, 34885 Istanbul (TR)
(72) Inventor: Yener, Emre, Maltepe / Istanbul (TR); Tunali, Ömer, Sariyer / Istanbul (TR); Selek, Mesut, Pendik / Istanbul (TR); Sayilgan, Neslihan, Üsküdar / Istanbul (TR)
(74) Representative: Illing, Rolf

(56) References cited:
- EP-A1- 0 940 320
- US-A1- 2004 150 142

## Description

The present invention refers to an axle suspension system for a vehicle according to the preamble of claim 1, comprising at least one vehicle body member, an axle for supporting left and right wheels, at least two shock absorber units and a Panhard rod, wherein a first end of the Panhard rod is connected to the axle, and at least one shock absorber unit and a second end of the Panhard rod are mounted to the vehicle body member, wherein the at last one shock absorber unit and the second end of the Panhard rod are both connected to a continuous mounting support which is mounted to the vehicle body member.

EP 0 940 320 A1 is directed to a chassis for a heavy-duty utility vehicle. EP 0 940 320 A1 discloses a U-shaped cross member joining two longitudinal frame members, whereby the two side sections of the U-shaped cross member consist of spring strut holders. One of the two spring strut holders is used as a supporting, retaining and coupling element for one end of the Panhard rod and for that purpose is extended downwards by means of a bearing bracket. Therefore, the Panhard rod is connected with one end to the spring strut holder via the bearing bracket, whereby the spring strut is connected with its upper end to said spring strut holder.

Vehicles with a rigid axle often have a Panhard rod, which restricts lateral movement of the wheels with respect to the body of the vehicle. This Panhard bar or track bar usually consists of a rigid bar running sideways in the same plane as the axle, connecting one end of the axle to the body on the opposite side of the vehicle. The bar attaches on either end with pivots that let it swivel upwards and downwards only, so that the axle can move vertically only.

Thereby, a Panhard rod is usually mounted to a frame of the body by means of a bracket. This bracket has to absorb lateral forces. A suspension system like an air suspension can be mounted to the body in the same area to absorb vertical movement of the axle and the wheels with respect to the body. Thus, usually at least two brackets are used to mount a suspension system and joints of a Panhard rod to the vehicle body. This requires several tools and the assembly time is rather high.

Therefore, there still is room for improvement in the field of mounting suspension components to a structure of a vehicle, and it is the object of the invention to provide a more effective way of mounting components like a Panhard rod and shock absorber units to a vehicle body member.

According to the invention, this object is achieved by an axle suspension system for a vehicle according to claim 1. This axle suspension system comprises at least one vehicle body member, an axle for supporting left and right wheels, at least two shock absorber units and a Panhard rod. A first end of the Panhard rod is connected to the axle, and at least one shock absorber unit and a second end of the Panhard rod are mounted to the vehicle body member. The at last one shock absorber unit and the second end of the Panhard rod are both connected to a continuous mounting support which is mounted to the vehicle body member.

Thus, at least one shock absorber unit and the Panhard rod are connected to a single mounting support, which is then mounted to a vehicle body member. This single mounting support provides for a new bracket design that combines the functions of at least two brackets: a Panhard bracket that absorbs lateral forces and a shock absorber bracket for shock absorber upper joint. It is an all-in-one bracket, which is easier to assemble than two separate brackets. This reduces the vehicle production time. Furthermore, tooling quantity and accordingly tooling cost is decreased. There are also less stocking costs and less packaging issues.

The mounting support can be a one-piece member, or the mounting support is formed by at least two members, which are rigidly connected to each other. In both cases, a continuous mounting support is provided to which at least one shock absorber unit and the Panhard rod can be connected. This preassembled unit can then be mounted to a vehicle body member like a frame or beam. Thus, the mounting support is a single component, which can be handled separately from the vehicle body.

The at least one shock absorber unit and the Panhard rod can be connected to the mounting support at suitable supporting points which allow these elements to function properly. The mounting point between the mounting support and a vehicle body member can also be chosen appropriately. In one embodiment of the invention, the mounting support is mounted to the vehicle body member between at least one supporting point for a shock absorber unit and a supporting point for the Panhard rod.

According to the invention, the mounting support is S-shaped between a supporting point for a shock absorber unit and a supporting point for the Panhard rod. According to the invention, the mounting support can curve outwards to provide a supporting point for a shock absorber unit and can curve inwards to provide a supporting point for the Panhard rod. Thereby, "outwards" means that the mounting support curves away from the longitudinal axis of a vehicle, and "inwards" means that the mounting support curves towards the longitudinal axis of the vehicle. Consequently, these references refer to the situation in which the axle suspension system according to the invention is used in a vehicle. For example, the at least one vehicle body member can be a beam, and the mounting support is mounted to an outer vertical wall of this beam at least at one mounting point. Thereby, "vertical" again refers to the situation in which the axle suspension system according to the invention is used in a vehicle. The Panhard rod runs sideways in the same plane as the axle.

The mounting support can be made from elements like plates, bars and/or beams, for example, which are connected to each other. In one embodiment of the invention, the mounting support is at least partially formed by two lateral walls that are connected by several bridges. The supporting point for a shock absorber unit can be formed by two outer hinges on the mounting support and an inner hinge on the shock absorber unit. A joint can be formed with these hinges, when the inner hinge of the shock absorber unit is received between the two outer hinges of the mounting support. In these embodiments, the two outer hinges can be located at the ends of two lateral walls of the mounting support so that the outer hinges are extensions of these two lateral walls. Thereby, the lateral walls form a fork between which the upper part of a shock absorber unit can pivotably be received. The same kind of joints can be provided to support the Panhard rod.

The mounting support is at least configured to carry the Panhard rod and one shock absorber unit on one side of the axle. A second shock absorber on the opposite side of the axle can be mounted to a vehicle body member by means of a different or the same mounting support. In one embodiment of the invention, two shock absorber units are connected to the mounting support each at opposite ends, wherein the mounting support is mounted to a vehicle body member at two mounting points. Thus, a continuous mounting support can run from one side of an axle to the other, and the mounting support is mounted to a vehicle body member on both sides. Thereby, the continuous mounting bracket can be formed by two mounting brackets and an intermediate cross member which rigidly connects both mounting brackets, wherein the mounting brackets are each mounted to a vehicle body member and the shock absorber units are connected to the mounting brackets. Hereby, the single mounting support provides for a new bracket design that combines the functions of at least three brackets: a Panhard bracket that absorbs lateral forces, a bracket for cross member connection and a bracket for shock absorber upper joint.

The two mounting brackets and the intermediate cross member form a continuous mounting support that can be used to support the Panhard rod and two opposite shock absorber units at the same time. Further intermediate elements can be provided between the two mounting brackets as long as the resulting mounting support still is a single component, which can be handled separately from the vehicle body. The individual elements can have different shapes and configurations. The cross member can be a simple plate, for example, whereas the two mounting brackets that are connected to a vehicle body member and support the two shock absorber units can have a more complex structure.

When a cross member is used to connect two opposite mounting brackets, the supporting point for the Panhard rod is preferably provided on the mounting support in the area of connection between the cross member and a mounting bracket. For example, the cross member can be connected to the mounting support next to hinges which hold the Panhard rod.

The invention also includes a vehicle with at least one axle suspension system, wherein the axle suspension system is implemented according to one or more of the embodiments described in this application. Preferably, this axle suspension system is a front air suspension system.

Further advantageous exemplary embodiments of the invention can be taken from the following detailed description of some exemplary embodiments of the present invention, in particular in conjunction with the figures.

In the figures:
- Fig. 1: a vehicle body member with two mounting brackets (prior art),
- Fig. 2: an axle suspension system according to one embodiment of the invention, and
- Fig. 3: an exploded view of components of the axle suspension system according to Fig. 2.

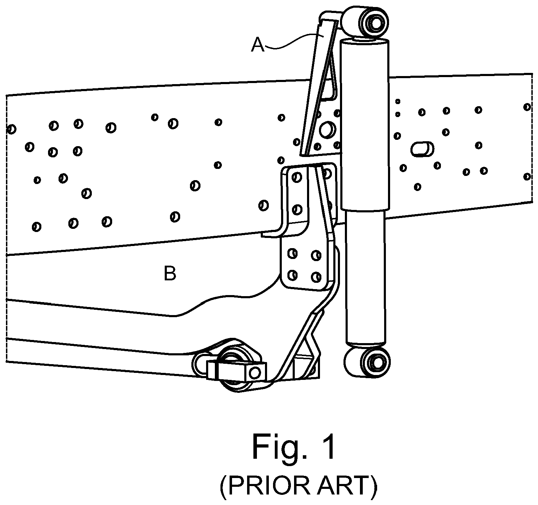

Fig. 1 shows a prior art suspension system with a Panhard rod and a shock absorber unit. Both components are attached to a vehicle body member wherein this vehicle body member is a beam in form of a U-shaped profile. The shock absorber unit is attached to the beam by means of a first bracket A, and the Panhard rod is attached to the beam by means of a second bracket B. Both brackets are attached to an outer vertical wall of the beam. The first bracket A has a triangular shape and projects upwards, and the upper end of the shock absorber unit is pivotably mounted to the upper end of the first bracket A. The second bracket B has an angled shape wherein it first projects downwards from the beam and then runs laterally to the opposite side of the vehicle.

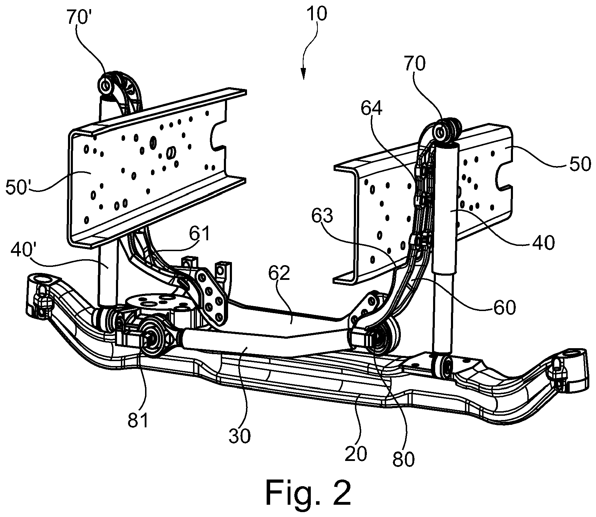

According to the invention, these two brackets A and B can be replaced by a single bracket that connects at least one Panhard rod and a shock absorber system to a body structure like a beam. This single bracket is described on the basis of the embodiment of an axle suspension system according to Fig. 2. Thereby, Fig. 2 shows an axle suspension system 10 with a rigid axle 20 and two shock absorber units 40 and 40'. The axle 20 can support two wheels (not shown). Thereby, the axle suspension system 10 can be a front air suspension system so that the axle 20 supports the two front wheels of a vehicle. The shock absorber units 40, 40' are connected to two beams 50 and 50' in form of two U-shaped profiles. These beams 50, 50' form part of the body of a vehicle, and additional components can be mounted to these beams. The beams run in the longitudinal direction of the vehicle.

A Panhard rod 30 extends laterally between the axle 20 and the opposite shock absorber unit 40. Thereby, the Panhard rod 30 is pivotably mounted to the axle 20 on the left side in Fig. 2 at a supporting point 81. Thus, the axle 20 can move vertically. The opposite end of the Panhard rod 30 is pivotably mounted to the lower end of a mounting bracket 60 at a supporting point 80. This mounting bracket 60 is attached to the outer vertical wall of the beam 50 so that the Panhard rod 30 hangs below the beam 50. The supporting point 80 between the Panhard rod 30 and the mounting bracket 60 is located below the lower edge of beam 50.

The right shock absorber unit 40 is mounted to the beam 50 by means of the same mounting bracket 60. The mounting bracket 60 projects upwardly from the beam 50 to pivotably support the upper end of the shock absorber unit 40. The supporting point 70 between the shock absorber unit 40 and the mounting bracket 60 is located above the upper edge of the beam 50.

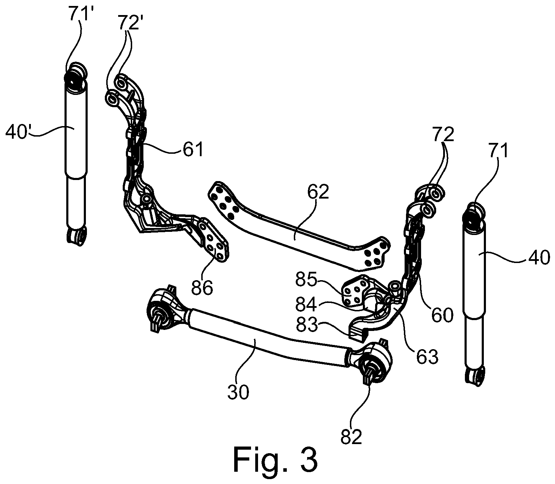

The mounting bracket 60 is basically S-shaped. Thereby, the upper part for supporting the shock absorber unit 40 curves outwards in the direction of the shock absorber unit 40, whereas the lower part for supporting the Panhard rod 30 curves inwards in the opposite direction. The mounting bracket 60 is made by two lateral walls that are connected by several transverse bridges. The pivot between the mounting bracket 60 and the upper part of the shock absorber unit 40 can be seen in Fig. 3 which shows an inner hinge 71 at the upper end of the shock absorber system 40 and two outer hinges 72 at the upper end of the mounting bracket 60. The inner hinge 71 can be received between the two outer hinges 72 to push a connecting pin through all hinges 71, 72.

Thereby, the two outer hinges 72 are located at the ends of two lateral walls that form the mounting bracket 60. At the opposite end of the mounting bracket 60, two similar outer hinges 83 and 84 are formed which hold a swivel pin 82 at the end of the Panhard rod 30 to form the supporting point 80. The same kind of joint can be used for the supporting point 81 between the Panhard rod 30 and the axle 20.

The mounting bracket 60 has a projection 63 which lies against the lower edge of the beam 50. This projection 63 is formed in both lateral walls of the mounting bracket 60. Further, the mounting bracket 60 comprises several holes 64 which can be used to secure the mounting bracket 60 to the beam 50 by means of screw joints, for example. Screw joints can be used in the outer vertical wall of the beam 50, but a screw joint can also be used to secure the mounting bracket 60 to the beam in the area of the projection 63.

A similar mounting bracket 61 is used on the opposite side of the axle 20 in order to mount the second shock absorber unit 40' to the second beam 50'. The upper part of this mounting bracket 61 basically corresponds to the upper part of the mounting bracket 60 witch outer hinges 72' which can receive an inner hinge 71' at the upper end of the second shock absorber unit 40'. However, the lower parts of the brackets are different since the second mounting bracket 61 does not directly support the Panhard rod 30. It supports a cross member 62 instead which provides for a rigid connection between the first mounting bracket 60 and the second mounting bracket 61. Both mounting brackets 60, 61 comprise perforated plates 85, 86, for example, which can be used to connect to corresponding perforated plates of the cross member 62. Thus, there is a rigid connection between the two mounting brackets 60, 61 so that the second mounting bracket 61 indirectly supports the Panhard rod 30, too. The two mounting brackets 60, 61 and the cross member 62 form a continuous mounting support.

### List of reference numerals:

- 10: Axle suspension system
- 20: Axle
- 30: Panhard rod
- 40, 40': Shock absorber unit
- 50, 50': Vehicle body member, beam
- 60, 61: Mounting bracket
- 62: Cross member
- 63: Projection
- 64: Hole
- 70, 70': Supporting point
- 71, 71': Inner hinge
- 72, 72': Outer hinge
- 80, 81: Supporting point
- 82: Swivel pin
- 83, 84: Outer hinge
- 85, 86: Plate

- A: Shock absorber bracket (prior art)
- B: Panhard rod bracket (prior art)

## Claims

1. Axle suspension system (10) for a vehicle, the axle suspension system (10) comprising at least one vehicle body member (50; 50'), an axle (20) for supporting left and right wheels, at least two shock absorber units (40; 40') and a Panhard rod (30), wherein a first end of the Panhard rod (30) is connected to the axle (20), and at least one shock absorber unit (40; 40') and a second end of the Panhard rod (30) are mounted to the vehicle body member (50; 50'), wherein the at least one shock absorber unit (40; 40') and the second end of the Panhard rod (30) are both connected to a continuous mounting support (60; 61; 62) which is mounted to the vehicle body member (50; 50')
**characterized in, that**
the mounting support (60; 61; 62) is S-shaped between a supporting point (70; 70') for a shock absorber unit (40; 40) and a supporting point (80) for the Panhard rod (30), wherein an upper part for supporting the shock absorber unit (40; 40) is curved outwards in the direction of the shock absorber, and wherein a lower part for supporting the Panhard rod (30) is curved inwards in the opposite direction.

2. Axle suspension system according to claim 1,
**characterized in, that**
the mounting support (60; 61; 62) is a one-piece member, or the mounting support (60; 61; 62) is formed by at least two members which are rigidly connected to each other.

3. Axle suspension system according to claim 1 or 2,
**characterized in, that**
the mounting support (60; 61; 62) is mounted to the vehicle body member (50; 50) between at least one supporting point (70; 70') for a shock absorber unit (40; 40) and a supporting point (80) for the Panhard rod (30).

4. Axle suspension system according to any of the preceding claims,
**characterized in, that**
the mounting support (60; 61; 62) is at least partially formed by two lateral walls that are connected by several bridges.

5. Axle suspension system according to any of the preceding claims,
**characterized in, that**
the at least one vehicle body member (50; 50') is a beam, and the mounting support (60; 61; 62) is mounted to an outer vertical wall of this beam at least at one mounting point.

6. Axle suspension system according to any of the preceding claims,
**characterized in, that**
the supporting point (70; 70') for a shock absorber unit (40; 40) is formed by two outer hinges (72; 72') on the mounting support (60; 61; 62) and an inner hinge (71; 71') on the shock absorber unit (40; 40').

7. Axle suspension system according to claim 6,
**characterized in that**
the two outer hinges (72; 72') are located at the ends of the two lateral walls of the mounting support (60; 61; 62).

8. Axle suspension system according to any of the preceding claims,
**characterized in, that**
two shock absorber units (40; 40') are connected to the mounting support (60; 61; 62) each at opposite ends, wherein the mounting support (60; 61; 62) is mounted to a vehicle body member (50; 50') at two mounting points.

9. Axle suspension system according to any of the preceding claims,
**characterized in that**
the continuous mounting bracket (60; 61; 62) is formed by two mounting brackets (60; 61) and an intermediate cross member (62) that rigidly connects both mounting brackets (60; 61), wherein the mounting brackets (60; 61) are each mounted to a vehicle body member (50; 50') and the shock absorber units (40; 40') are connected to the mounting brackets (60; 61).

10. Axle suspension system according to any of the preceding claims,
**characterized in, that**
a supporting point (80) for the Panhard rod (30) is provided on the mounting support (60; 61; 62) in the area of connection between the cross member (62) and a mounting bracket (40).

11. Axle suspension system according to claim 9 or 10,
**characterized in, that**
the cross member (62) is a plate.

12. Vehicle with at least one axle suspension system,
**characterized in, that**
the axle suspension system (10) is implemented according to one or more of claims 1 to 11.

13. Vehicle according to claim 12,
**characterized in, that**
the axle suspension system is a front air suspension system.

## Patentansprüche

1. Achsenfedersystem (10) für ein Fahrzeug, wobei das Achsenfedersystem (10) mindestens ein Karosserieelement (50; 50') eine Achse (20) zum Lagern des linken und rechten Rads, mindestens zwei Stoßdämpfereinheiten (40; 40') und einen Panhardstab (30) umfasst, wobei ein erstes Ende des Panhardstabs (30) mit der Achse (20) verbunden ist und mindestens eine Stoßdämpfereinheit (40; 40') und ein zweites Ende des Panhardstabs (30) am Karosserieelement (50; 50') montiert sind, wobei die mindestens eine Stoßdämpfereinheit (40; 40') und das zweite Ende des Panhardstabs (30) beide mit einer durchgehenden Montagehalterung (60; 61; 62) verbunden sind, die am Karosserieelement (50; 50') montiert ist,
**dadurch gekennzeichnet, dass**
die Montagehalterung (60; 61; 62) zwischen einem Lagerpunkt (70; 70') für eine Stoßdämpfereinheit (40; 40) und einem Lagerpunkt (80) für den Panhardstab (30) S-förmig ist, wobei ein oberer Teil zum Tragen der Stoßdämpfereinheit (40; 40)in Richtung des Stoßdämpfers nach außen gekrümmt ist und wobei ein unterer Teil zum Tragen des Panhardstabs (30) in die entgegengesetzte Richtung nach innen gekrümmt ist.

2. Achsenfedersystem nach Anspruch 1,
**dadurch gekennzeichnet, dass**
die Montagehalterung (60; 61; 62) ein einteiliges Element ist oder die Montagehalterung (60; 61; 62) durch mindestens zwei Elemente ausgebildet ist, die starr miteinander verbunden sind.

3. Achsenfedersystem nach Anspruch 1 oder 2,
**dadurch gekennzeichnet, dass**
die Montagehalterung (60; 61; 62) zwischen mindestens einem Lagerpunkt (70; 70') für eine Stoßdämpfereinheit (40; 40) und einem Lagerpunkt (80) für den Panhardstab (30) am Karosserieelement (50; 50) montiert ist.

4. Achsenfedersystem nach einem der vorstehenden Ansprüche,
**dadurch gekennzeichnet, dass**
die Montagehalterung (60; 61; 62) zumindest teilweise aus zwei lateralen Wänden ausgebildet ist, die über mehrere Brücken miteinander verbunden sind.

5. Achsenfedersystem nach einem der vorstehenden Ansprüche,
**dadurch gekennzeichnet, dass**
das mindestens eine Fahrzeugelement (50; 50') ein Träger ist und die Montagehalterung (60; 61; 62) an mindestens einem Montagepunkt an einer vertikalen Außenwand dieses Trägers montiert ist.

6. Achsenfedersystem nach einem der vorstehenden Ansprüche,
**dadurch gekennzeichnet, dass**
der Lagerpunkt (70; 70') für eine Stoßdämpfereinheit (40; 40') durch zwei äußere Scharniere (72; 72') auf der Montagehalterung (60; 61; 62) und ein inneres Scharnier (71; 71') auf der Stoßdämpfereinheit (40; 40') ausgebildet ist.

7. Achsenfedersystem nach Anspruch 6,
**dadurch gekennzeichnet, dass**
sich die zwei äußeren Scharniere (72; 72') an den Enden der zwei lateralen Wände der Montagehalterung (60; 61; 62) befinden.

8. Achsenfedersystem nach einem der vorstehenden Ansprüche,
**dadurch gekennzeichnet, dass**
zwei Stoßdämpfereinheiten (40; 40') jeweils an entgegengesetzten Enden mit der Montagehalterung (60; 61; 62) verbunden sind, wobei die Montagehalterung (60; 61; 62) an zwei Montagepunkten an einem Karosserieelement (50; 50') montiert ist.

9. Achsenfedersystem nach einem der vorstehenden Ansprüche,
**dadurch gekennzeichnet, dass**
die durchgehende Montageklammer (60; 61; 62) durch zwei Montageklammern (60; 61) und ein dazwischenliegendes Querelement (62), das beide Montageklammern (60; 61) starr miteinander verbindet, ausgebildet ist, wobei die Montageklammern (60; 61) jeweils an einem Karosserieelement (50; 50') montiert sind und die Stoßdämpfereinheiten (40; 40') mit den Montageklammern (60; 61) verbunden sind.

10. Achsenfedersystem nach einem der vorstehenden Ansprüche,
**dadurch gekennzeichnet, dass**
ein Lagerpunkt (80) für den Panhardstab (30) auf der Montagehalterung (60; 61; 62) im Verbindungsbereich zwischen dem Querelement (62) und einer Montageklammer (40) vorgesehen ist.

11. Achsenfedersystem nach Anspruch 9 oder 10,
**dadurch gekennzeichnet, dass**
das Querelement (62) eine Platte ist.

12. Fahrzeug mit mindestens einem Achsenfedersystem,
**dadurch gekennzeichnet, dass**
das Achsenfedersystem (10) nach einem oder mehreren der Ansprüche 1 bis 11 umgesetzt ist.

13. Fahrzeug nach Anspruch 12,
**dadurch gekennzeichnet, dass**
das Achsenfedersystem ein vorderes Luftfedersystem ist.

## Revendications

1. Système de suspension d'essieu (10) pour un véhicule, le système de suspension d'essieu (10) comprenant au moins un élément de carrosserie de véhicule (50 ; 50'), un essieu (20) pour supporter des roues gauche et droite, au moins deux amortisseurs (40 ; 40') et une barre panhard (30), une première extrémité de la barre panhard (30) étant reliée à l'essieu (20) et au moins une unité d'amortisseur (40 ; 40') et une seconde extrémité de la barre panhard (30) étant montées sur l'élément de carrosserie de véhicule (50 ; 50'), l'au moins une unité d'amortisseur (40 ; 40') et la seconde extrémité de la barre panhard (30) étant toutes deux reliées à un support de montage (60 ; 61 ; 62) continu qui est monté sur l'élément de carrosserie de véhicule (50 ; 50'),
**caractérisé en ce que** le support de montage (60 ; 61 ; 62) est en forme de S entre un point d'appui (70 ; 70') pour une unité d'amortisseur (40 ; 40) et un point d'appui (80) pour la barre panhard (30), une partie supérieure pour supporter l'unité d'amortisseur (40 ; 40) étant incurvée en direction extérieure de l'amortisseur, et une partie inférieure pour supporter la barre panhard (30) étant incurvée en direction inverse.

2. Système de suspension d'essieu selon la revendication 1, **caractérisé en ce que** le support de montage (60 ; 61 ; 62) est un élément monobloc, ou le support de montage (60 ; 61 ; 62) est formé par au moins deux éléments qui sont reliés rigidement l'un à l'autre.

3. Système de suspension d'essieu selon la revendication 1 ou 2, **caractérisé en ce que** le support de montage (60 ; 61 ; 62) est monté sur l'élément de carrosserie de véhicule (50 ; 50) entre au moins un point d'appui (70 ; 70') pour une unité d'amortisseur (40 ; 40) et un point d'appui (80) pour la barre panhard (30).

4. Système de suspension d'essieu selon l'une quelconque des revendications précédentes, **caractérisé en ce que** le support de montage (60 ; 61 ; 62) est au moins partiellement formé par deux parois latérales qui sont reliées par plusieurs ponts.

5. Système de suspension d'essieu selon l'une quelconque des revendications précédentes, **caractérisé en ce que** l'au moins un élément de carrosserie de véhicule (50 ; 50') est une poutre, et le support de montage (60 ; 61 ; 62) est monté sur une paroi verticale extérieure de cette poutre au moins à un point de montage.

6. Système de suspension d'essieu selon l'une quelconque des revendications précédentes, **caractérisé en ce que** le point d'appui (70 ; 70') pour une unité d'amortisseur (40 ; 40) est formé par deux charnières extérieures (72 ; 72') sur le support de montage (60 ; 61 ; 62) et une charnière intérieure (71 ; 71') sur l'unité d'amortisseur (40 ; 40').

7. Système de suspension d'essieu selon la revendication 6, **caractérisé en ce que** les deux charnières extérieures (72 ; 72') sont situées aux extrémités des deux parois latérales du support de montage (60 ; 61 ; 62).

8. Système de suspension d'essieu selon l'une quelconque des revendications précédentes, **caractérisé en ce que** deux unités d'amortisseur (40 ; 40') sont reliées au support de montage (60 ; 61 ; 62) chacune à des extrémités opposées, le support de montage (60 ; 61 ; 62) étant monté sur un élément de carrosserie de véhicule (50 ; 50') en deux points de montage.

9. Système de suspension d'essieu selon l'une quelconque des revendications précédentes, **caractérisé en ce que** le support de montage (60 ; 61 ; 62) continu est formé par deux supports de montage (60 ; 61) et une traverse intermédiaire (62) qui relie rigidement les deux supports de montage (60 ; 61), dans lequel les supports de montage (60 ; 61) sont chacun montés sur un élément de carrosserie de véhicule (50 ; 50') et les unités d'amortisseur (40 ; 40') sont reliées aux supports de montage (60 ; 61).

10. Système de suspension d'essieu selon l'une quelconque des revendications précédentes, **caractérisé en ce qu'**un point d'appui (80) pour la barre panhard (30) est prévu sur le support de montage (60 ; 61 ; 62) dans la zone de liaison entre la traverse (62) et un support de montage (40).

11. Système de suspension d'essieu selon la revendication 9 ou 10, **caractérisé en ce que** la traverse (62) est une plaque.

12. Véhicule avec au moins un système de suspension d'essieu, **caractérisé en ce que** le système de suspension d'essieu (10) est réalisé selon une ou plusieurs des revendications 1 à 11.

13. Véhicule selon la revendication 12, **caractérisé en ce que** le système de suspension d'essieu est un système de suspension pneumatique avant.
